# EUROPEAN PATENT APPLICATION

(11) **EP 4 116 910 A1**
(43) Date of publication of application: **11.01.2023**
(21) Application number: 20923003.6
(22) Date of filing: 05.03.2020
(51) Int. Cl.: G06Q 30/06

(54) **ARTICLE ORDERING METHOD, AND PROGRAM**

(71) Applicant: Hitachi Global Life Solutions, Inc., Minato-ku, Tokyo 105-8410 (JP)
(72) Inventor: YOSHINO, Tomoya, Tokyo 105-8410 (JP); MORISHIMA, Akitoshi, Tokyo 105-8410 (JP); HASEGAWA, Ryo, Tokyo 105-8410 (JP); KASAHARA, Kenya, Tokyo 105-8410 (JP); TAKATA, Kentaro, Tokyo 105-8410 (JP); NEMA, Taiki, Tokyo 105-8410 (JP)
(74) Representative: MERH-IP Matias Erny Reichl Hoffmann Patentanwälte PartG mbB
(86) International application number: PCT/JP2020/009374
(87) International publication number: WO 2021/176643

(57) **Abstract**

An item ordering method includes a display-order-mode-selection-screen step (S111) and an accept-order-mode-setting step (S112). The display-order-mode-selection-screen step is a step of displaying an order-mode selection screen (IM21) on a display (an operation display panel [11]) of an electric product (a washing machine [10]) or a display (a touch panel [42]) of an external device (a terminal device [40]) associated with the electric product. The accept-order-mode-setting step is a step of accepting a setting of the automatic order mode or the specified order mode on the order-mode selection screen. The order-mode selection screen (IM21) is a screen on which a setting of an automatic order mode or a specified order mode is selectable. The automatic order mode is a mode in which an order is placed automatically for an item used in or by the electric product or stored in the electric product. The specified order mode is a mode in which an order for the item is placed by specifying an arbitrary order recipient.

## Description

### TECHNICAL FIELD

The present invention is related to an item ordering method and program.

### BACKGROUND

Prior art in the present technical field that is disclosed in the Abstract of Patent Literature 1 is as follows: "An ordering system for ordering consumables for home appliances includes a home appliance, a communication terminal, and an e-commerce site server. The home appliance includes: a sensor for detecting usage status of the home appliance main body and consumables of the home appliance main body; a controller for calculating status information of consumables from information detected by the sensor; and a communication processing unit for transmitting the status information to the outside. The communication terminal includes a communication processing unit that receives status information sent from the communication processing unit of the home appliance and transmits information to the outside. The e-commerce site server transmits and receives information to and from the communication processing unit of the communication terminal via wide area public network. The home appliance transmits status information to the communication terminal when the used amount of consumables is determined.

### CITATION LIST

### PATENT LITERATURE

Patent Literature 1: Japanese Unexamined Patent Application Publication No. 2018-73007

### SUMMARY OF INVENTION

### TECHNICAL PROBLEM

There are washing machines that automatically put laundry chemicals such detergents and softeners into the washing machine drum. However, there is no description in Patent Literature 1 on the following point: improving convenience when ordering an item that is used in an electric product or an item that is stored in an electric product. Here, "improving convenience when ordering" refers to improving freedom of choice or ease of ordering an item for a user.

The object of the present invention is to provide an item ordering method and a program that improves convenience when ordering an item.

### SOLUTION TO PROBLEM

The present invention that achieves the above-mentioned objective is an item ordering method and a program that includes: a display-order-mode-selection-screen step of displaying an order-mode selection screen on a first display of an electric product or a second display of an external device associated with the electric product, wherein the order-mode selection screen is a screen on which a setting of an automatic order mode or a specified order mode is selectable, the automatic order mode is a mode in which an order is placed automatically for an item used in or by the electric product or stored in the electric product, and the specified order mode is a mode in which an order for the item is placed by specifying an arbitrary order recipient; and an accept-order-mode-setting step of accepting a setting of the automatic order mode or the specified order mode on the order-mode selection screen.

### ADVANTAGEOUS EFFECTS OF INVENTION

According to the present invention, convenience when ordering an item can be improved.

### BRIEF DESCRIPTION OF DRAWINGS

FIG. 1 shows a schematic block diagram of an item ordering system in which an item ordering method according to an embodiment is applied.
FIG. 2 is a flow chart of a process of the item ordering method according to an embodiment when setting an order recipient.
FIG. 3A is drawing 1 showing an example of a screen that is displayed on a display of a terminal device.
FIG. 3B is drawing 2 showing an example of a screen that is displayed on a display of a terminal device.
FIG. 3C is drawing 3 showing an example of a screen that is displayed on a display of a terminal device.
FIG. 3D is drawing 4 showing an example of a screen that is displayed on a display of a terminal device.
FIG. 3E is drawing 5 showing an example of a screen that is displayed on a display of a terminal device.
FIG. 3F is drawing 6 showing an example of a screen that is displayed on a display of a terminal device.
FIG. 3G is drawing 7 showing an example of a screen that is displayed on a display of a terminal device.
FIG. 4 is a flow chart of a process of the item ordering method according to an embodiment when setting various settings.
FIG. 5A is drawing 1 showing an example of a screen that is displayed on a display of a terminal device.
FIG. 5B is drawing 2 showing an example of a screen that is displayed on a display of a terminal device.
FIG. 5C is drawing 3 showing an example of a screen that is displayed on a display of a terminal device.
FIG. 5D is drawing 4 showing an example of a screen that is displayed on a display of a terminal device.
FIG. 6 is a table showing a set of examples of electric products and orderable items to which an item ordering method according to the present invention may be applied.

### DESCRIPTION OF EMBODIMENTS

An embodiment of the present invention (hereinafter a "present embodiment") will be described in detail with reference to drawings. It should be noted that each drawing is intended to provide a schematic illustration to facilitate sufficient understanding of the present invention. Thus the present invention is not limited to the examples illustrated in the drawings. Furthermore, in the drawings, common components or similar components are given the same reference signs and duplicate descriptions thereof are omitted.

### Outline of Item Ordering Method

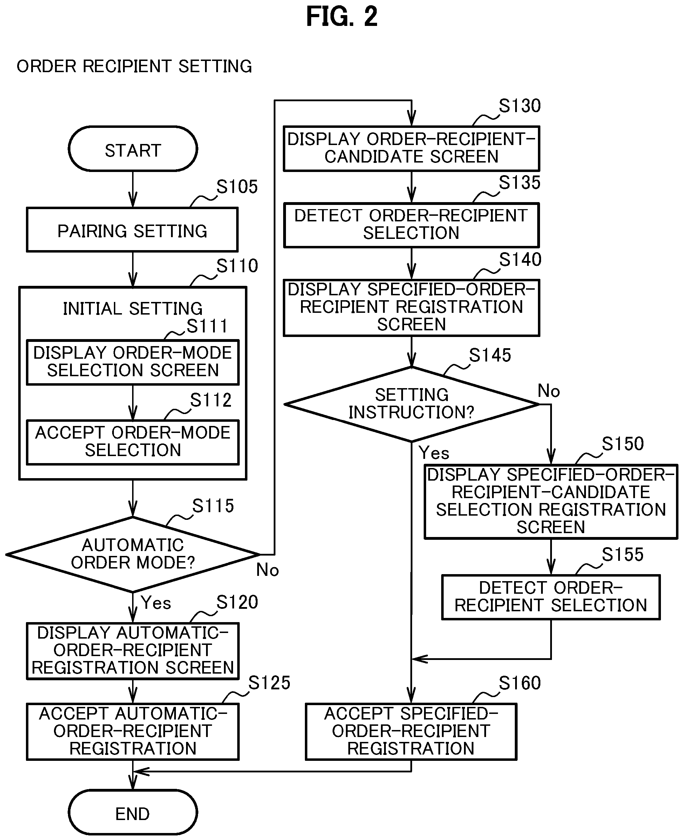

The item ordering method according to the present embodiment includes a display-order-mode-selection-screen step (step S111 of FIG. 2) and an accept-order-mode-setting step (step S112 of FIG. 2).

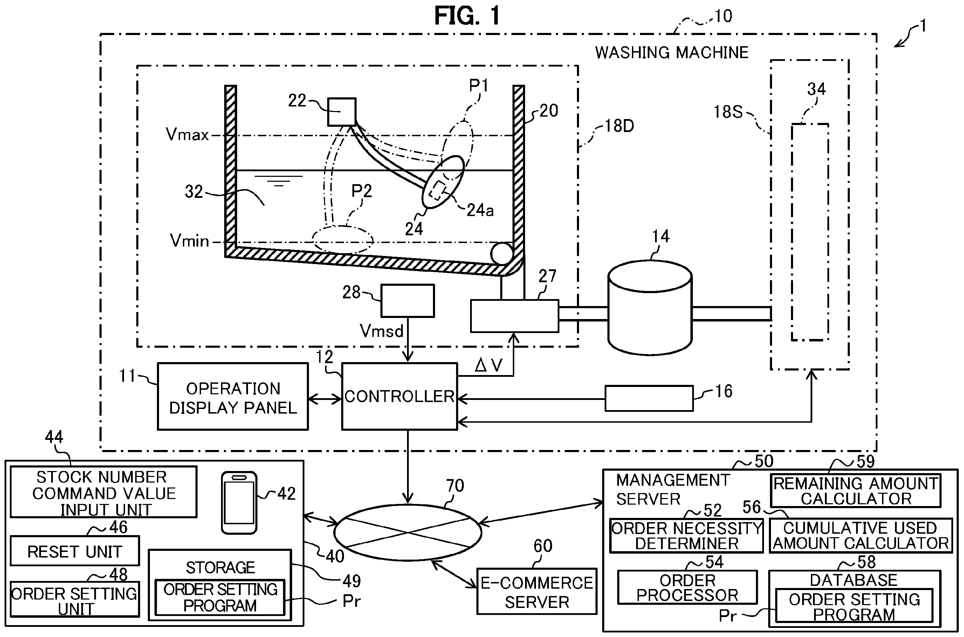

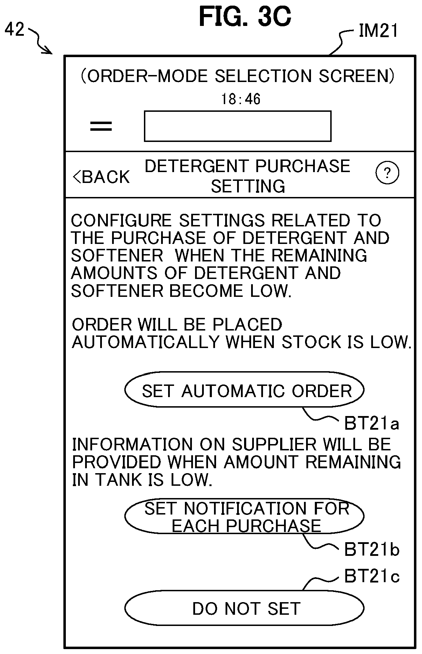

The display-order-mode-selection-screen step (step S111 of FIG. 2) is a step of displaying an order-mode selection screen IM21 (see FIG. 3C) onto a display (an operation display panel 11 of FIG. 1) of an electric product (a washing machine 10 of FIG. 1) or a display (a touch panel 42 of FIG. 1) of an external device (a terminal device 40 of FIG. 1) that is associated with the electric product. The accept-order-mode-setting step (step S112 of FIG. 2) is a step of accepting a setting of an automatic order mode or a specified order mode on the order-mode selection screen IM21 (see FIG. 3C).

The order-mode selection screen IM21 (see FIG. 3C) is a screen with which an automatic order mode or a specified order mode can be selectively set. The automatic order mode is a mode in which an automatic ordering is performed for an item (a laundry chemical such as a detergent 32 or softener 34) that is used by the electric product (a washing machine 10) or an item that is stored in the electric product. The specified order mode is a mode in which an ordering of an item is performed by specifying an arbitrary order recipient. The present embodiment will be described for a case where the order-mode selection screen IM21 (see FIG. 3C) is displayed on a display (a touch panel 42 of FIG. 1) of an external device (a terminal device 40 of FIG. 1).

### Configuration of Item Ordering System

With reference to FIG. 1, a configuration of an item ordering system 1 in which an item ordering method according to the present embodiment is applied will be described. FIG. 1 is a schematic block diagram of an item ordering system 1 in which an item ordering method according to the present embodiment is applied.

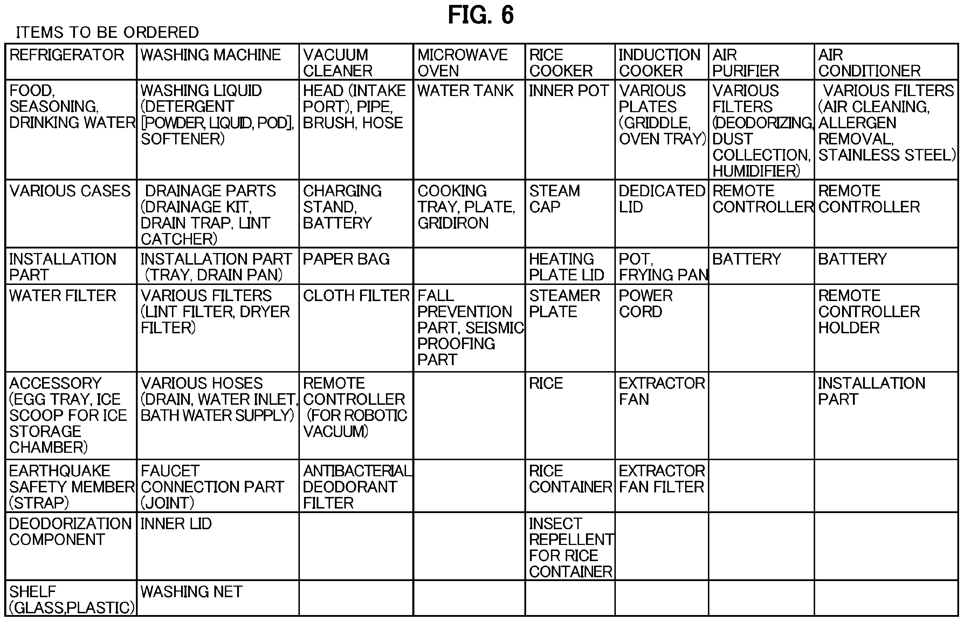

The present embodiment will be described for a case where the electric product is a washing machine 10 and an item used in the electric product is a laundry chemical such as a detergent 32 or softener 34.
The electric product is not limited to the washing machine 10 and may be various devices. The item is not limited to an item used in the electric product and may be an item that is stored in the electric product. Electric products and items will be described further with reference to FIG. 6.

In the example shown in FIG. 1, the item ordering system 1 includes a washing machine 10 (an electric product), a terminal device 40 (an external device), a management server 50, and an e-commerce server 60. These can communicate with each other via communication network 70.

The washing machine 10 is an electric product that uses an item (in the present embodiment, a laundry chemical such as a detergent 32 or a softener 34) that is ordered when the remaining amount thereof becomes low. The washing machine 10 includes a function that manages a remaining amount of the orderable item.

The terminal device 40 is a computer and is an external device associated with the washing machine 10 (the electric product). The terminal device 40 functions as a management device for the washing machine 10.

The terminal device 40 (the external device) is owned by a user owning the washing machine 10 (the electric product), a family member of the user, a cohabitant of the user, or the like. The present embodiment will be described for a case where the washing machine 10 (the electric product) and the terminal device 40 (the external device) are owned by the same user.

The management server 50 is a server that manages the washing machine 10 (the electric product), the item, the e-commerce site (electronic commerce site) of an order recipient, an e-commerce site of an order recipient candidate, or the like. The management server 50 functions as a management device for the washing machine 10.

The e-commerce server 60 is a server that performs electronic commerce (EC). The e-commerce server functions as an electronic commerce device that performs electronic commerce based on an order from the management server 50.

The washing machine 10 includes an operation display panel 11 (a display), a controller 12, a washing machine drum 14, a weighing device 16, a detergent dispensing unit 18D, and a softener dispensing unit 18S.

Inside the washing machine 10, the controller 12 includes hardware that a general computer is equipped with, such as a CPU (a central processing unit), RAM (random access memory), and ROM (read only memory). The ROM stores therein a control program executed by the CPU, various data, and the like. Through this configuration, the controller 12 controls individual units of the washing machine 10. The operation display panel 11 displays various information to the user under the control of the controller 12. Furthermore, the operation display panel 11 inputs various commands to the controller 12 based on operation of the user.

The washing machine drum 14, configured in a substantially cylindrical shape, is where laundry (not shown) is put into by the user. The weighing device 16 measures the weight of the laundry that has been put into the washing machine drum 14. The detergent dispensing unit 18D dispenses a detergent 32 into the washing machine drum 14 based on control of the controller 12. Similarly, the softener dispensing unit 18S dispenses a softener 34 into the washing machine drum 14 based on control of the controller 12.

The detergent dispensing unit 18D includes a detergent tank 20 (a tank), a float support unit 22, a float 24, a detergent dispenser 27 (a dispenser), and a liquid amount detector 28. The detergent tank 20 stores therein the detergent 32, which is a liquid detergent. The float 24 is rotatably supported by the float support unit 22. The float 24 is configured to float on the detergent 32, and a magnet 24a is embedded in the float 24.

When the amount of liquid, in other words the amount of the detergent 32, in the detergent tank 20 reaches a maximum liquid amount Vmax, the float 24 rotates to a position P1. On the other hand, when the amount of liquid, in other words the amount of the detergent 32, reaches a remaining amount threshold Vmin, the float 24 rotates to a position P2. The remaining amount threshold Vmin is a value that serves as a reference for ordering or replenishing the detergent 32.

The liquid amount detector 28 detects a position of the magnet 24a and thereby detects the amount of liquid of the detergent 32. Hereinafter, the amount of liquid detected by the liquid amount detector 28 is referred to as a "measured amount of liquid in tank Vmsd (an automatic dispense parameter)". The controller 12 determines an amount of the detergent 32 and the softener 34 to be dispensed based on the weight of the laundry detected by the weighing device 16. When an input amount ΔV of the detergent 32 is specified by the controller 12, the detergent dispenser 27 dispenses the detergent 32 into the washing machine drum 14 by the input amount ΔV.

The softener dispensing unit 18S is configured to include components (not shown) that are the equivalent to the following components of the abovementioned detergent dispensing unit 18D: the detergent tank 20, the float support unit 22, the float 24, the detergent dispenser 27, and the liquid amount detector 28. The softener dispensing unit 18S stores therein the softener 34 instead of the detergent 32. When the amount of the softener 34 to be dispensed is specified by the controller 12, the softener 34 is dispensed into the washing tub 14 by that amount.

The terminal device 40 is a portable information processing device such as a smartphone. The terminal device 40 includes a touch panel 42 (display) that can be operated by the user. The touch panel 42 includes a flat panel display ( no reference sign given) and a touch sensor (no reference sign given) attached to a surface of the flat panel display.

The management server 50 processes an ordering of the detergent 32, the softener 34, or the like according to the situation of the washing machine 10.

The e-commerce server 60 performs electronic commerce based on an order from the management server 50.

The terminal device 40, the management server 50, and the e-commerce server 60 are equipped with hardware of a general computer such as a CPU, RAM, ROM, and an SSD (a solid state drive). In the SSD, an OS (operating system), an application program, various data, and so on are stored. The OS and application program are loaded onto the RAM and executed by the CPU.

Inside the terminal device 40, which excludes the touch panel 42, and the management server 50 of FIG. 1, functions realized by an order setting program Pr are shown as blocks.

In other words, the management server 50 includes an order necessity determiner 52, an order processor 54, a cumulative used amount calculator 56, and a database 58. The order necessity determiner 52 is an order necessity determining means to determine whether or not to order the detergent 32 or softener 34 based on the state of the washing machine 10. The order processor 54 is an order processing means to process an order of the detergent 32 or softener 34. When the order necessity determiner 52 determines that the detergent 32 or softener 34 should be ordered, the order processor 54 communicates with the e-commerce server 60 via the communication network 70 and performs a process for ordering the detergent 32 or the softener 34.

The cumulative used amount calculator 56 calculates a cumulative amount of usage after the detergent tank 20 or the like has been filled with the detergent 32 or softener 34. The cumulative used amount calculator 56 calculates an estimated amount of the detergent 32 or softener 34 remaining in the detergent tank 20 or the like, in other words an estimated amount of liquid in a tank.

The database 58 stores therein the order setting program Pr that is provided to the terminal device 40. The order setting program Pr is a program that causes the terminal device 40 to perform the item ordering method according to the present embodiment. The order setting program Pr displays various screens on the display (the operation display panel 11) of the electric product (the washing machine 10) or the display (the touch panel 42) of the external device (the terminal device 40) that has been associated with the electric product.

The database 58 also stores therein various information regarding the order recipient or the order recipient candidate (for example, a logo [including a logo mark] used by the order recipient or the order recipient candidate, a URL [uniform resource locator] address information of an e-commerce site, or the like).

The database 58 also stores therein various information regarding an item that is a potential orderable item. For example, the database 58 stores therein the following information on multiple types of detergents and softeners as information concerning items: package design information, brand information such as a product name, information on a packaged quantity, information on an amount to be used per unit weight of laundry, information on a name of the manufacturer selling the detergent or softener, or the like.

The terminal device 40, for example, downloads the above-mentioned order setting program Pr from the management server 50 and stores the program Pr in storage 49. By executing the order setting program Pr, a controller of the terminal device 40 configures a stock number instruction value input unit 44, a reset unit 46, and an order setting unit 48 in a processing unit. The order setting program Pr may be executed not only by the controller of the terminal device 40 but also by the controller 12 of the washing machine 10.

When, based on a user operation, a stock number instruction value (a number of stocks of an item to be stored) of the detergent 32 or softener 34 is inputted, the stock number instruction value input unit 44 notifies the management server 50 of said stock number instruction value.

The reset unit 46, based on a user operation, instructs the management server 50 to reset the above-described cumulative amount of usage.

The order setting unit 48 performs, based on a user operation, setting and registering of an order mode, an order recipient, and an orderable item (in the present embodiment, the detergent 32 or softener 34 to be ordered).

### Details of Item Ordering Method

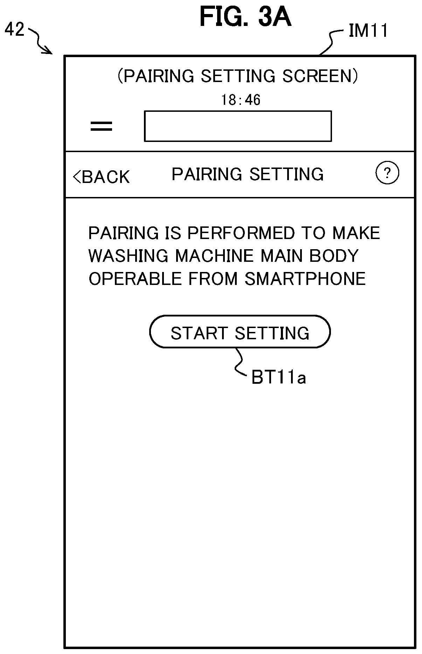

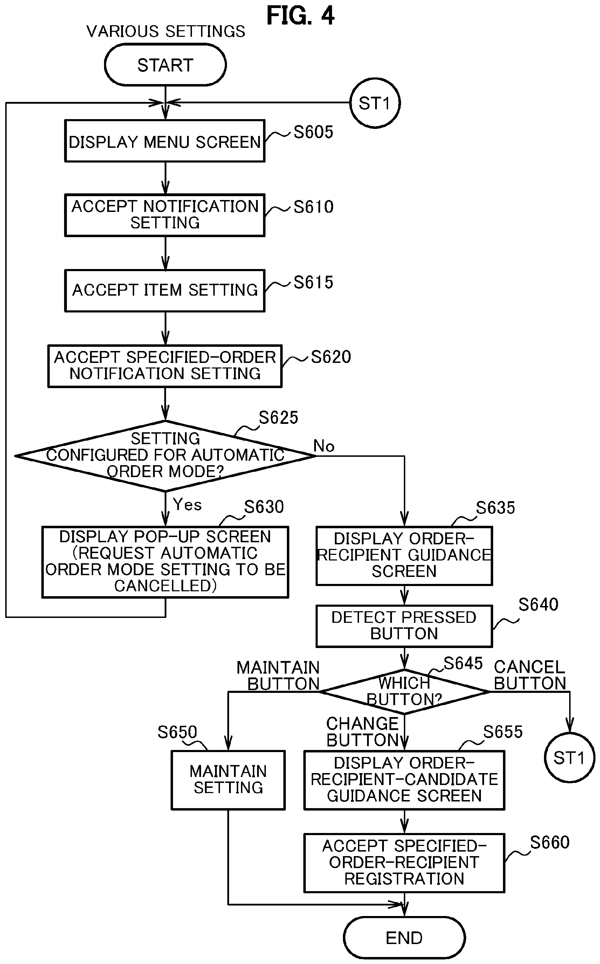

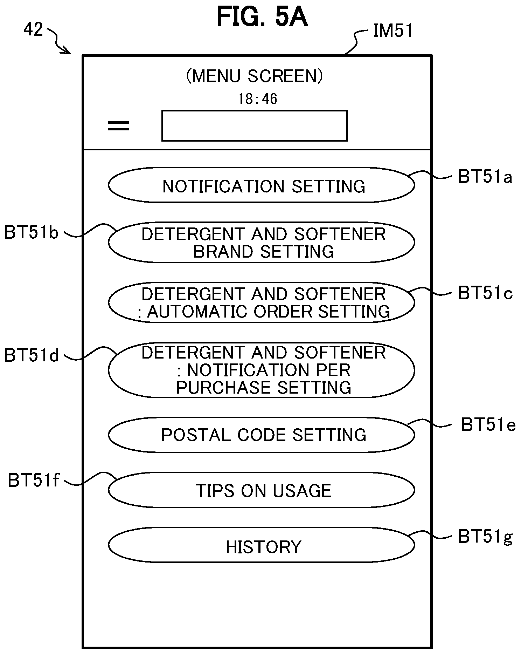

The item ordering method according to the present embodiment will be described with reference to FIGS. 2, 3A - 3G, 4, 5A - 5D. First, processing details of the item ordering method when setting an order recipient will be described with reference to FIGS. 2, 3A - 3G. Then, processing details of the item ordering method when setting various settings will be described with reference to FIG. 4, 5A - 5D.

The process shown in FIG. 2 and the process shown in FIG. 4 are executed mainly by the order setting unit 48 of the terminal device 40. In the screen examples shown in FIGS. 3A - 3G and 5A - 5D, displayed content of a button and a name of the button may not match.

### Processing Details When Setting Order Recipient

First, processing details of the item ordering method when setting an order recipient will be described with reference to FIGS. 2, 3A - 3G. FIG. 2 is a flowchart of the item ordering method according to the present embodiment when setting an order recipient. FIGS. 3A - 3G show screen examples that are each displayed on the touch panel 42 (a display) of the terminal device 40.

As shown in FIG. 2, in the item ordering method according to the present embodiment, a pairing setting step is first performed when setting an order recipient (step S105). The pairing setting step is a step of setting the washing machine 10 (the electric product) and the terminal device 40 (the external device) as devices (pairing devices) that are associated with each other.

In the pairing setting step, the user operates the terminal device 40 to display a pairing setting screen IM11 (see FIG. 3A) on the touch panel 42 and, from the pairing setting screen IM11, performs a pairing operation of pairing the washing machine 10 and terminal device 40. In response to the pairing operation, the washing machine 10 and the terminal device 40 each recognizes the other as a pairing device and sets and registers information on the other in storage (more specifically, registration data [not shown] stored in the storage).

For example, the user operates the terminal device 40 (the external device) in the vicinity of the washing machine 10 (the electric product). Then, when the user presses a Start Setting button BT11a on the pairing setting screen IM11 (see FIG. 3A), the terminal device 40 obtains an e-mail address and an attribute information of the washing machine 10 from the washing machine 10 via wireless communication. In response to this, the terminal device 40 recognizes the washing machine 10 as a pairing device, sets and registers the e-mail address and attribute information of the washing machine 10 in the storage 49, and transmits an e-mail address of the terminal device 40 to the washing machine 10. In response to this, the washing machine 10 recognizes the terminal device 40 as a pairing device and sets and registers the e-mail address of the terminal device 40 in storage (not shown).

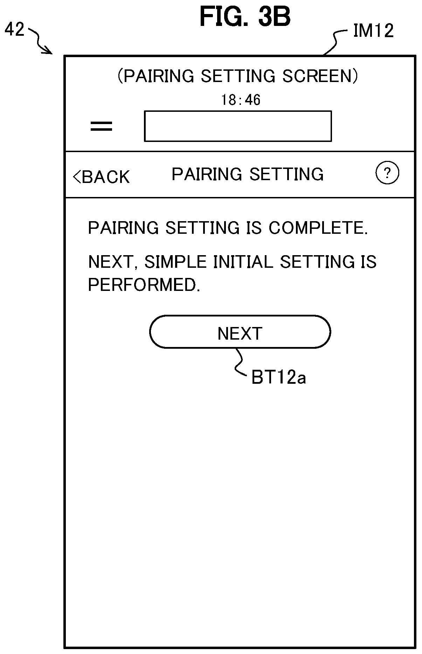

When the Start Setting button BT11a is pressed on the pairing setting screen IM11 (see FIG. 3A) and an association (pairing) with the washing machine 10 is complete, the terminal device 40 displays, for example, a pairing setting screen IM12 (see FIG. 3B). The pairing setting screen IM12 includes an Advance button BT12a for performing an initial setting. When the user presses the Advance button BT12a on the pairing setting screen IM12, the terminal device 40 starts the initial setting.

Returning to FIG. 2, an initial setting step (step S110) is performed after step S105. The initial setting step is a step of setting the order mode and so on.

Step S110 includes performing a display-order-mode-selection-screen step (step S111) and then performing an accept-order-mode-selection step (step S112). The display-order-mode-selection-screen step is a step of displaying the order-mode selection screen IM21 (see FIG. 3C) on the touch panel 42 of the terminal device 40. The accept-order-mode-selection step is a step of accepting an order mode that has been selected on the order-mode selection screen IM21 (see FIG. 3C).

In step S111, the order-mode selection screen IM21 (see FIG. 3C) described above is displayed on the touch panel 42 of the terminal device 40 for example. In the example shown in FIG. 3C, the order-mode selection screen IM21 is configured to include an Automatic-Order-Mode Select button BT21a for selecting an automatic order mode, a Specified-Order-Mode Select button BT21b for selecting a specified order mode, and a Cancel button BT21c for cancelling the setting process. Here, description will be given for a case where the user presses the Automatic-Order-Mode Select button BT21a or the Specified-Order-Mode Select button BT21b.

Note that in a case where the Cancel button BT21c is pressed, the terminal device 40 displays an arbitrary screen (for example, the menu screen IM51 shown in FIG. 5A) on the touch panel 42. Hereinafter, the same applies when a Cancel button is pressed on another screen.

Returning to FIG. 2, in step S112, when the user presses the Automatic-Order-Mode Select button BT21a or the Specified-Order-Mode Select button BT21b on the order-mode selection screen IM21, the terminal device 40 determines whether the automatic order mode has been selected. (Step S115).

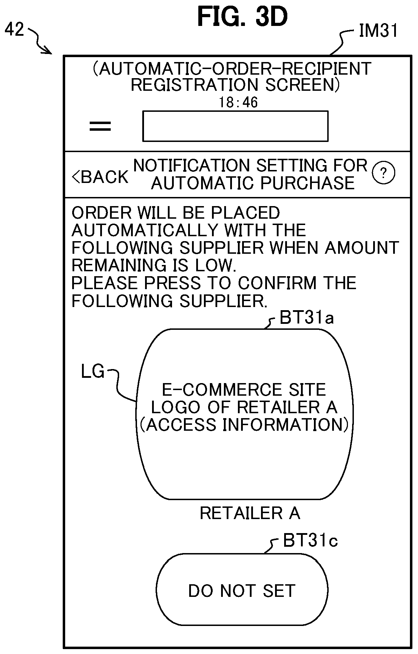

When it is determined in step S115 that the automatic order mode has been selected ("Yes" of S115), a display-automatic-order-recipient-registration-screen step is performed (step S120). The display-automatic-order-recipient-registration-screen step is a step of displaying an automatic-order-recipient registration screen IM31 (see FIG. 3D) on the touch panel 42 of the terminal device 40.

In the example shown in FIG. 3D, the automatic-order-recipient registration screen IM31 is configured to include a logo LG, which is access information for accessing an e-commerce site of an order recipient, an Automatic-Order-Recipient Setting Registration button BT31a for setting and registering an order recipient for automatic ordering, and a Cancel button BT31c for canceling the setting process. Here, description will be given for a case where the user presses the Automatic-Order-Recipient Setting Registration button BT31a.

The automatic-order-recipient registration screen IM31 may be configured so that, instead of or together with the logo LG, URL address information (not shown) of an e-commerce site of an order recipient candidate is displayed as access information for accessing an e-commerce site of an order recipient.

Returning to FIG. 2, in step S120, when the user presses the Automatic-Order-Recipient Setting Registration button BT31a on the automatic-order-recipient registration screen IM31, an accept-automatic-order-recipient-registration step is performed (step S125). The accept-automatic-order-recipient-registration step is a step of setting and registering the order recipient associated with the Automatic-Order-Recipient Setting Registration button BT31a in the storage 49 as an order recipient for automatic ordering. When the accept-automatic-order-recipient-registration step of step S125 has been performed, processing of the routine shown in FIG. 2 ends.

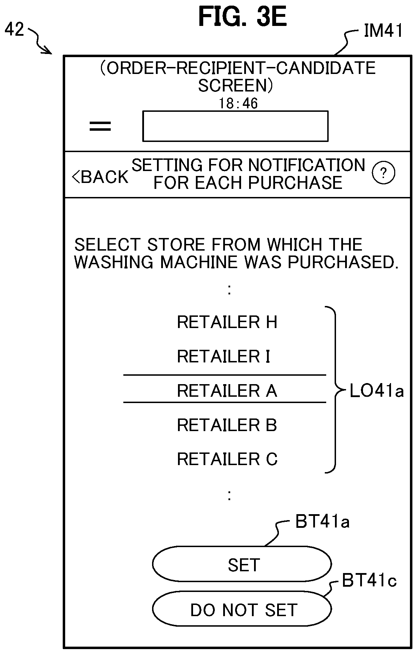

When, on the other hand, it is determined in step S115 that the automatic order mode has not been selected ("No" of S115), in other words when it is determined that the specified order mode has been selected, a display-order-recipient-candidate-screen step is performed (step S130). The display-order-recipient-candidate-screen step is a step of displaying an order-recipient-candidate screen IM41 (see FIG. 3E) on the touch panel 42 of the terminal device 40.

In the example shown in FIG. 3E, the order-recipient-candidate screen IM41 is configured to include: an Order-Recipient Candidate Display field LO41a in which a list of one or more order recipient candidates that are selectable is displayed; a Set button BT41a for setting and registering a selected order recipient candidate as a specified order recipient; and a Cancel button BT41c for canceling the setting process. Here, description will be given for a case where the user selects "Retailer A" as an arbitrary order recipient candidate from the Order-Recipient Candidate Display field LO41a and presses the Set button BT41a.

In one or more embodiments, the Order-Recipient Candidate Display field LO41a includes, as an order recipient candidate, a store from which the electric product (the washing machine 10 in the present embodiment) has been purchased or a group to which the store is affiliated. One reason may be that such a store or a group to which the store is affiliated manages a purchase history of the electric product by the user and can provide a service that is suitable for the user (for example, a maintenance service of the electric product or an ordering service of parts of the electric product). Another reason may be that when such a store or a group to which the store is affiliated runs, for example, a loyalty program, the user will be able to use reward points when purchasing an item so that they will have to pay less or the user will be able to receive reward points according to a paid amount. In this way, the item ordering system 1 can improve the convenience of the user. Furthermore, since such a store or a group to which the store is affiliated can build a continuous relationship with the user, sales of various electric products and items can be improved.

Returning to FIG. 2, in step S130, when the user selects an arbitrary order recipient candidate in the Order-Recipient Candidate Display field LO41a and presses the Set button BT41a, a detect-order-recipient-selection step is performed (step S135). The detect-order-recipient-selection step is a step of detecting an order recipient candidate that has been selected by the user.

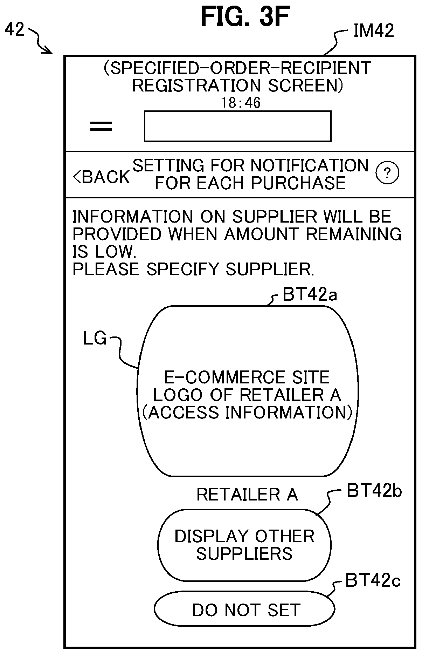

After step S135, a display-specified-order-recipient-registration-screen step is performed (step S140). The display-specified-order-recipient-registration-screen step is a step of displaying the specified-order-recipient registration screen IM42 (see FIG. 3F) on the touch panel 42 of the terminal device 40.

In the example shown in FIG. 3F, the specified-order-recipient registration screen IM42 is configured to include a Specified-Order-Recipient Setting Registration button BT42a for setting and registering a specified order recipient, an Order-Recipient-Candidate Summon button BT42b for summoning an order recipient candidate, and a Cancel button BT42c for canceling the setting process. In the example shown in FIG. 3F, a logo LG of " retailer A", which has been selected by the user as the order recipient candidate in the order-recipient-candidate screen IM41 (see FIG. 3E), is displayed by being superimposed on the Specified-Order-Recipient Setting Registration button BT42a. Here, description will be given for a case where the user presses the Specified-Order-Recipient Setting Registration button BT42a or the Order-Recipient-Candidate Summon button BT42b.

Returning to FIG. 2, when, in step S140, the user presses the Specified-Order-Recipient Setting Registration button BT42a or the Order-Recipient-Candidate Summon button BT42b on the order-recipient-candidate screen IM41 (see FIG. 3E), the terminal device 40 determines whether a setting instruction has been given (step S145). When the Specified-Order-Recipient Setting Registration button BT42a has been pressed, the terminal device 40 determines that a setting instruction has been given. On the other hand, when the Order-Recipient-Candidate Summon button BT42b has been pressed, the terminal device 40 determines that a setting instruction has not been given.

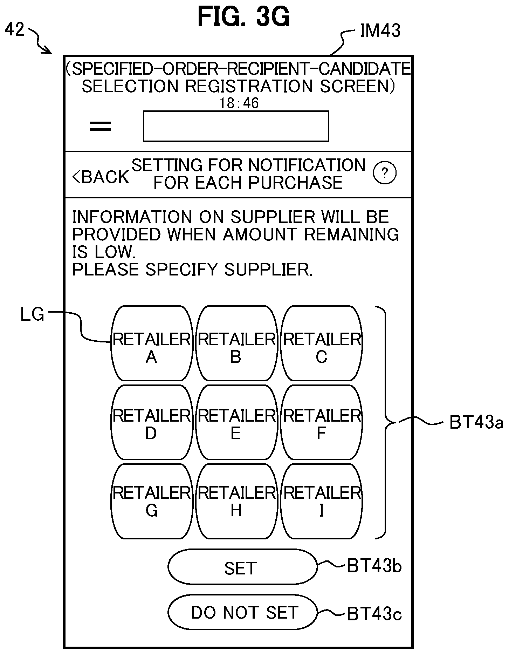

When it is determined in step S145 that a setting instruction has not been given ("No" in step S145), in other words, when the Order-Recipient-Candidate Summon button BT42b has been pressed, a display-specified-order-recipient-candidate-selection-screen step is performed. (Step S150). The display-specified-order-recipient-candidate-selection-screen step is a step of displaying a specified-order-recipient-candidate selection registration screen IM43 (see FIG. 3G) on the touch panel 42 of the terminal device 40.

In the example shown in FIG. 3G, the specified-order-recipient-candidate selection registration screen IM43 is configured to include the following: multiple Order-Recipient-Candidate Select buttons BT43a for selecting an order recipient candidate as a specified order recipient; a Setting Registration button BT43b for setting and registering the selected specified order recipient; and a Cancel button BT43c for canceling the setting process. Here, description will be given for a case where the user selects an arbitrary order recipient candidate as a specified order recipient, presses the Order-Recipient-Candidate Select button BT43a corresponding to the specified order recipient, and then presses the Setting Registration button BT43b.

In one or more embodiments, the specified-order-recipient-candidate selection registration screen IM43 includes, as an order recipient candidate, a store from which the electric product (the washing machine 10 in the present embodiment) has been purchased or a group to which the store is affiliated. Reasons are the same as those given in the case for the Order-Recipient Candidate Display field LO41a on the order-recipient-candidate screen IM41 (see FIG. 3E) described above.

Returning to FIG. 2, when, in step S150, the user presses the Order-Recipient-Candidate Select button BT43a corresponding to the selected specified order recipient and then presses the Setting Registration button BT43b on the specified-order-recipient-candidate selection registration screen IM43, a detect-order-recipient-selection step is performed (step S155). The detect-order-recipient-selection step is a step of detecting the specified order recipient that has been selected by the user.

An accept-specified-order-recipient-registration step is performed (step S160) when it is determined in step S145 that there has been a setting instruction ("Yes" in step S145) or after step S155. The accept-specified-order-recipient-registration step is a step of setting and registering the specified order recipient in the storage 49. When the accept-specified-order-recipient-registration step of step S155 is performed, the processing of the routine shown in FIG. 2 ends.

### Details of Processing When Various Settings Are Set

Processing details when various settings of the item ordering method are set will be described with reference to FIGS. 4, 5A - 5D. FIG. 4 is a flowchart of the item ordering method according to the present embodiment when various settings are set. FIGS. 5A - 5D show examples of screens that are each displayed on the touch panel 42 (a display) of the terminal device 40.

Here, description will be given for a case where the user performs a notification setting, an item setting, or a specified order notification setting. The notification setting refers to a process of setting a specification of a notification for the user. The item setting refers to a process of setting an orderable item (an object for which the remaining amount thereof is monitored), a brand of the orderable item, a quantity to be ordered, or the like. The specified order notification setting refers to a process of setting the specified order mode, an order recipient of the specified order, or the like.

As shown in FIG. 4, in the item ordering method according to the present embodiment, a display-menu-screen step is, for example, first performed when setting various settings (step S605). The display-menu-screen step is a step of displaying a menu screen IM51 (see FIG. 5A) on the touch panel 42 of the terminal device 40.

In the example shown in FIG. 5A, the menu screen IM51 is configured to include a Notification Setting button BT51a, an Item Setting button BT51b, an Automatic-Order Setting button BT51c, a Specified-Order-Notification Setting button BT51d, a Postal-Code Setting button BT51e, a Help button BT51f, and a History button BT51g.

The Notification Setting button BT51a is a button for setting a specification of a notification given to the user.
The Item Setting button BT51b is a button for setting an orderable item (an object for which the remaining amount thereof is monitored), a brand of the orderable item, a quantity to be ordered, or the like.
The Automatic-Order Setting button BT51c is a button for setting the automatic order mode.
The Specified-Order-Notification Setting button BT51d is a button for setting the specified order mode, an order recipient of the specified order, or the like.
The Postal-Code Setting button BT51e is a button for setting a postal code of an area where the orderable item is to be delivered.
The Help button BT51f is a button for summoning reference information.
The History button BT51g is a button for summoning order history.

Returning to FIG. 4, in step S605, when the user presses The Notification Setting button BT51a on the menu screen IM51 (see FIG. 5A) for example, an accept-notification-setting step is performed (step S610). The accept-notification-setting step is a step of accepting a setting of a specification for a notification to the user. Here, description will be given for a case where the terminal device 40 displays the menu screen IM51 (see FIG. 5A) on the touch panel 42 when the accept-notification-setting step has been performed.

After step S610, when the user presses the Item Setting button BT51b on the menu screen IM51 (see FIG. 5A) for example, an accept-item-setting step is performed (step S615). The accept-item-setting step is a step of setting an orderable item (an object for which the remaining amount thereof is monitored), a brand of the orderable item, a quantity to be ordered, or the like. Here, description will be given for a case where the terminal device 40 displays the menu screen IM51 (see FIG. 5A) on the touch panel 42 when the accept-item-setting step has been performed.

After step S615, when the user presses the Specified-Order-Notification Setting button BT51d on the menu screen IM51 (see FIG. 5A) for example, an accept-specified-order-notification-setting step is performed (step S620). The accept-specified-order-notification-setting step is a step of setting a specified order mode, a specified order recipient, or the like.

At this stage, the terminal device 40 determines whether there is a setting for the automatic order mode (step S625).

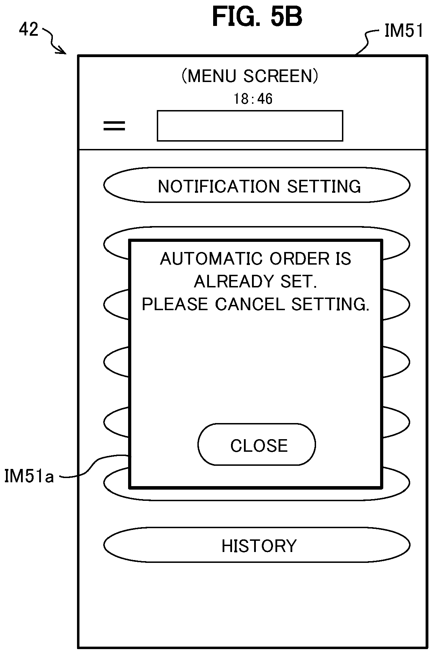

When it is determined in step S625 that there is a setting for the automatic order mode ("Yes" in S625), a display-pop-up-screen step is performed (step S630). The display-pop-up-screen step is a step of displaying a pop-up screen IM51a (see FIG. 5B) in front of the menu screen IM51.

In the example shown in FIG. 5B, the pop-up screen IM51a includes, for example, a request to cancel the setting of the automatic order mode. After step S630, the process returns to step S605.

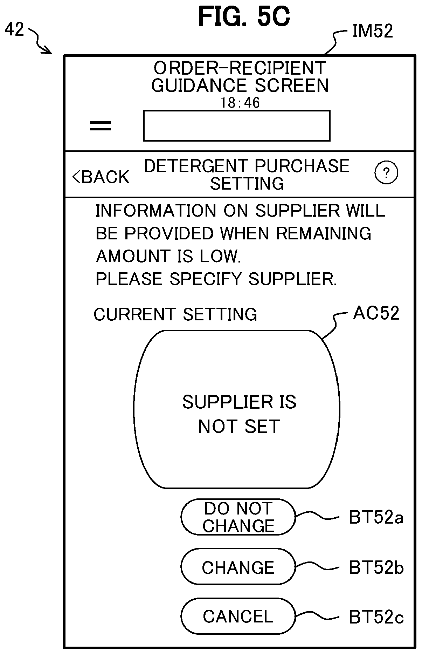

Returning to FIG. 4, when it is determined in step S625 that there is no setting for the automatic order mode ("No" in S625), a display-order-recipient-guidance-screen step is performed (step S635). The display-order-recipient-guidance-screen step is a step of displaying an order-recipient guidance screen IM52 (see FIG. 5C) on the touch panel 42 of the terminal device 40.

In the example shown in FIG. 5C, the order-recipient guidance screen IM52 includes an access information display part AC52, a Maintain button BT52a, a Change button BT52b, and a Cancel button BT52c. Here, description will be given for a case where the user presses the automatic-order-mode select button BT21a or the specified-order-mode select button BT21b.

The access information display part AC52 is a place for displaying access information for accessing an e-commerce site of an order recipient (for example, a logo LG [see FIG. 3F] or URL address information of an e-commerce site [not shown]).
The Maintain button BT52a is a button for maintaining the setting of an order recipient.
The Change button BT52b is a button for changing the setting of the order recipient.
The Cancel button BT52c is a button for canceling the setting of the order recipient.

When an order recipient is set, access information corresponding to the order recipient is displayed on the access information display part AC52. Upon looking at the access information display part AC52, the user either presses the Maintain button BT52a when the setting of the order recipient is to be maintained, or presses the Change button BT52b when the setting of the order recipient is to be changed, or presses the Cancel button BT52c when the setting of the order recipient is to be cancelled.

After step S635, a Detect-Pressed-Button step is performed (step S340). The Detect-Pressed-Button step is a step of detecting a button that has been pressed by the user.

After step S640, the terminal device 40 determines which button has been pressed (step S645).

When it is determined in step S645 that the Maintain button BT52a has been pressed, a maintain-setting step is performed (step S650). The maintain-setting step is a step of maintaining the setting of the order recipient. When the maintain-setting step of step S650 has been performed, the processing of the routine shown in FIG. 4 ends.

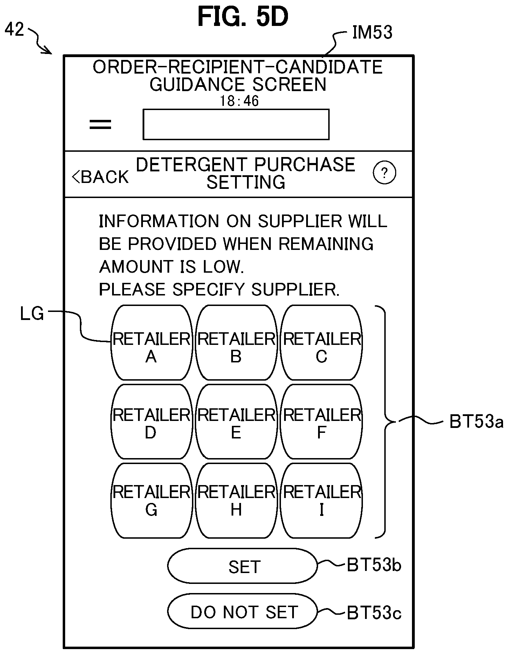

When, on the other hand, it is determined in step S645 that the Change button BT52b has been pressed, a display-order-recipient-candidate-guidance-screen step is performed (step S655). The display-order-recipient-candidate-guidance-screen step is a step of displaying an order-recipient-candidate guidance screen IM53 (see FIG. 5D) on the touch panel 42 of the terminal device 40.

In the example shown in FIG. 5D, the order-recipient-candidate guidance screen IM53 is configured to include the following: multiple Order-Recipient-Candidate Select buttons BT53a for selecting an order recipient candidate as a specified order recipient; a Setting Registration button BT53b for setting and registering the specified order recipient that has been selected; and a Cancel button BT53c for canceling the setting process. Here, description will be given for a case where the user selects an arbitrary order recipient candidate as the specified order recipient, presses the Order-Recipient-Candidate Select button BT53a corresponding to the specified order recipient, and then presses the Setting Registration button BT53b.

In one or more embodiments, the order-recipient-candidate guidance screen IM53 includes a store that purchased the electric product (a washing machine 10 in the present embodiment) or a group to which the store is affiliated as an order recipient candidate. Reasons are the same as those given in the case for the order-recipient candidate display field LO41a on the order-recipient-candidate screen IM41 (see FIG. 3E) described above.

Returning to FIG. 4, in step S655, when the user presses the Order-Recipient-Candidate Select button BT53a corresponding to the specified order recipient selected on the order-recipient-candidate guidance screen IM53 and then presses the Setting Registration button BT53b, an accept-specified-order-recipient-registration step is performed (step S660). The accept-specified-order-recipient-registration step is a step of setting and registering the specified order recipient in the storage unit 49. When the accept-specified-order-recipient-registration step of step S660 has been performed, the processing of the routine shown in FIG. 4 ends.

When, on the other hand, it is determined in step S645 that the Cancel button BT52c has been pressed, the process returns to step S605 via the reference sign ST1.

Examples of Types of Electric Products and Orderable Items

The item ordering method according to the present invention can be applied not only to a washing machine 10 but also to various electric products. Furthermore, in the item ordering method according to the present invention, various items can be ordered according to a type of electric product.

A set of examples of electric products and items will be described with reference to FIG. 6. FIG. 6 is a table showing an example of electric products and orderable items for which the item ordering method according to the present invention is applicable.

As shown in FIG. 6, the item ordering method according to the present invention can be applied to an electric product such as a refrigerator, a washing machine, a vacuum cleaner, a microwave oven, a rice cooker, an induction cooker, an air purifier, an air conditioner, or other home appliances. Furthermore, with the item ordering method according to the present invention, items such as those shown in FIG. 6 can be ordered according to the type of electric product.

For example, when the electric product is a refrigerator, the item ordering method according to the present invention can be used to order an item such as food, seasoning, or drinking water that is stored in the refrigerator or an item for the refrigerator such as various cases, an installation part, water filter, an accessory (an egg tray, an ice scoop used in an ice storage chamber), an earthquake safety member (a strap), a deodorization component, or a shelf (glass, plastic).

For example, when the electric product is a washing machine, the item ordering method according to the present invention can be used to order an item such as a washing liquid (detergent [powder, liquid, laundry detergent pod], softener), drainage parts (drainage kit, drain trap, lint catcher), installation parts (tray, drain pan), any of various types of filters (lint filter, dryer filter), various hoses (drain hose, water inlet hose, bath water supply hose), faucet connection parts (joint), an inner lid, a washing net.

For example, when the electric product is a vacuum cleaner, the item ordering method according to the present invention can be used to order an item such as a head (intake port), a pipe, a brush, a hose, a charging stand, a battery, a paper bag, a cloth filter, a remote controller (for a robotic vacuum), or an antibacterial deodorant filter.

For example, when the electric product is a microwave oven, the item ordering method according to the present invention can be used to order an item such as a water tank, a cooking tray, a plate, a gridiron, a fall prevention part, or a seismic proofing part.

For example, when the electric product is a rice cooker, the item ordering method according to the present invention can be used to order an item such as an inner pot, a steam cap, a heating plate lid, a steamer plate, rice, a rice container, or an insect repellent for a rice container.

For example, when the electric product is an induction cooker, the item ordering method according to the present invention can be used to order an item such as any of various types of plate (griddle, oven tray), a dedicated lid, a pot, a frying pan, a power cord, a extractor fan, or an extractor fan filter.

For example, when the electric product is an air purifier, the item ordering method according to the present invention can be used to order an item such as a remote controller, any of various filters (deodorizing filter, dust collector filter, humidifier filter), or a battery.

For example, when the electric product is an air conditioner, the item ordering method according to the present invention can be used to order an item such as a remote controller, any of various filters (air cleaning filter, allergen removal filter, stainless steel filter), a battery, a remote controller holder, or an installation part.

### Main Features of Item Ordering Method

(1) As shown in FIG. 2, the item ordering method according to the present embodiment includes a display-order-mode selection-screen step (step S111) and an accept-order-mode-setting step (step S112).
   The display-order-mode-selection-screen step (step S111) is a step of displaying an order-mode selection screen IM21 (see FIG. 3C) on a display (an operation display panel 11) of an electric product (a washing machine 10) or a display (a touch panel 42) of an external device (a terminal device 40) that is associated with the electric product. The accept-order-mode-setting step (step S112) is a step of accepting a setting of an automatic order mode or a specified order mode on the order-mode selection screen IM21 (see FIG. 3C).
   The order-mode selection screen IM21 (see FIG. 3C) is a screen on which a setting of the automatic order mode or specified order mode can be selected. The automatic order mode is a mode for automatically ordering an item (a laundry chemical such as a detergent 32 or softener 34) that the electric product (the washing machine 10) uses or an item stored in the electric product. The specified order mode is a mode for ordering an item by specifying an arbitrary order recipient.
   With such an item ordering method according to the present embodiment, because the automatic order mode or specified order mode can be set with ease by using the order-mode selection screen IM21 (see FIG. 3C), convenience when ordering an item is improved (for example, a degree of freedom of choice for the user and the ease of ordering an item).
(2) As shown in FIG. 3C, the order-mode selection screen IM21 used in the item ordering method according to the present embodiment may be configured so that a setting of either the automatic order mode or specified order mode can be selected on a single screen.
   With such an item ordering method according to the present embodiment, because the automatic order mode or specified order mode can selectively be set on the single screen, the user can easily set the order mode.
(3) As shown in FIG. 2, the item ordering method according to the present embodiment may, when the specified order mode is selected to be set on an order-mode selection screen IM21 (see FIG. 3C), include the following steps: a display-order-recipient-candidate-screen step (step S130) of displaying on a display the order-recipient-candidate screen IM41 (see FIG. 3E) on which an arbitrary order recipient is selectable from multiple order recipient candidates; and an accept-specified-order-recipient-registration step (step S160) of accepting the registration of an arbitrary order recipient that has been selected on the order-recipient-candidate screen IM41 (see FIG. 3E).
   In such an item ordering method according to the present embodiment, when the setting of the specified order mode is selected, an arbitrary specified order recipient can, from multiple order recipient candidates, be selected and this setting be registered. This means that the user can easily set the specified order recipient.
(4) As shown in FIG. 3E, the order-recipient-candidate screen IM41 used in the item ordering method according to the present embodiment may include access information for accessing an e-commerce site of an order recipient candidate so that by pressing the access information, the user may be guided to the e-commerce site of the order recipient associated with the access information.
   With such an item ordering method according to the present embodiment, the user can set a suitable order recipient candidate as a specified order recipient by viewing the access information for accessing an e-commerce site of the order recipient candidate.
(5) The access information used in the item ordering method according to the present embodiment may include a logo LG (see FIG. 3D) of an order recipient candidate or address information (not shown) of an e-commerce site of the order recipient candidate or both the logo LG (see FIG. 3D) of an order recipient candidate and the address information (not shown) of an e-commerce site of the order recipient candidate.
   Such an item ordering method according to the present embodiment uses access information such as a logo LG (see FIG. 3D) or address information (not shown) from which the connected site can be confirmed easily. Because of this, the user can set an order recipient candidate that is suitable for the user as a specified order recipient.
(6) As shown in FIG. 3E, the order-recipient-candidate screen IM41 used in the item ordering method according to the present embodiment may include a store from which the electric product was purchased or a group to which the store is affiliated as an order recipient candidate.
   In such an item ordering method according to the present embodiment, it is possible to easily set and register a store from which the electric product was purchased or a group to which the store is affiliated as a specified order recipient. Therefore, it becomes easier for the user to be provided with, for example, a maintenance service for the electric product, a parts ordering service for the electric product, reward points for a loyalty program.
(7) As shown in FIG. 5, the item ordering method according to the present embodiment may include an accept-item-setting step (step S610) for accepting a setting for an item.

In such an item ordering method according to the present embodiment, an orderable item (an object for which the remaining amount thereof is monitored), a brand of the orderable item, or quantity to be ordered can be freely set on the terminal device 40 or the washing machine 10 according to a requirement of the user.

As described above, according to the item ordering method according to the present embodiment, convenience when ordering an item can be improved.

The present invention is not limited to the embodiment described above. Numerous modifications and variations of the present invention are possible without departing from the gist of the present invention.

For example, the above-described embodiment has been described in detail so that the gist of the present invention can be easily understood. Therefore, the present invention is not necessarily limited to embodiments that include all the described steps. Furthermore, in the present invention, another step may be added to a certain step or a part of the steps may be changed to another step. Furthermore, in the present invention, a part of the steps may be deleted.

For example, an electric product to which the item ordering method according to the present invention is applied is not limited to the home appliances shown in FIG. 6 and may be office equipment such as a printer, copier, or multifunction device that can both print and copy.

### Reference Signs List

- 1: Item ordering system
- 10: Washing machine (electric product)
- 11: Operation display panel (display)
- 12: Controller
- 14: Washing machine drum
- 16: Weighing device
- 18D: Detergent dispensing unit
- 18S: Softener dispensing unit
- 20: Detergent tank
- 22: Float support unit
- 24: Float
- 24a: Magnet
- 27: Detergent dispenser
- 28: Liquid amount detector
- 32: Detergent (laundry chemical)
- 34: Softener (laundry chemical)
- 40: Terminal device (external device)
- 42: Touch panel (display)
- 44: Stock number instruction value input unit
- 46: Reset unit
- 48: Order setting unit
- 49: Storage
- 50: Management server
- 52: Order necessity determiner
- 54: Order processor
- 56: Cumulative used amount calculator
- 58: Database
- 60: E-commerce server
- 70: Communication network
- AC52: Access information display part
- BT11a: Start setting button
- BT12a: Advance button
- BT21a: Automatic-Order-Mode Select button
- BT21b: Specified-Order-Mode Select button
- BT21c: Cancel button
- BT31a: Automatic-Order-Recipient Setting Registration button
- BT31c: Cancel button
- BT41a: Set button
- BT41c: Cancel button
- BT42a: Specified-Order-Recipient Setting Registration button
- BT42b: Order-Recipient-Candidate Summon button
- BT42c: Cancel button
- BT43a: Order-Recipient-Candidate Select button
- BT43b: Setting Registration button
- BT43c: Cancel button
- BT51a: Notification Setting button
- BT51b: Item Setting button
- BT51c: Automatic-Order Setting button
- BT51d: Specified-Order-Notification Setting button
- BT51e: Postal-Code Setting button
- BT51f: Help button
- BT51g: History button
- BT52a: Maintain button
- BT52b: Change button
- BT52c: Cancel button
- BT53a: Order-Recipient-Candidate Select button
- BT53b: Setting Registration button
- BT53c: Cancel button
- IM11, IM12: Pairing setting screen
- IM21: Order-mode selection screen
- IM31: Automatic-order-recipient registration screen
- IM41: Order-recipient-candidate screen
- IM42: Specified-order-recipient registration screen
- IM43: Specified-order-recipient-candidate selection registration screen
- IM51: Menu screen
- IM51a: Pop-up screen
- IM52: Order-recipient guidance screen
- IM53: Order-recipient-candidate guidance screen
- LG: Logo (access information)
- LO41a: Order-recipient candidate display field
- Pr: Order setting program
- ΔV: Input amount (automatic dispense parameter)
- Vmax: Maximum liquid amount
- Vmin: Remaining amount threshold
- Vmsd: Measured amount of liquid in tank (automatic dispense parameter)

## Claims

1. An item ordering method comprising:
a display-order-mode-selection-screen step of displaying an order-mode selection screen on a first display of an electric product or a second display of an external device associated with the electric product, wherein the order-mode selection screen is a screen on which a setting of an automatic order mode or a specified order mode is selectable, the automatic order mode is a mode in which an order is placed automatically for an item used in or by the electric product or stored in the electric product, and the specified order mode is a mode in which an order for the item is placed by specifying an arbitrary order recipient; and
an accept-order-mode-setting step of accepting a setting of the automatic order mode or the specified order mode on the order-mode selection screen.

2. The item ordering method according to claim 1, wherein:
the order-mode selection screen is configured so that a setting of the automatic order mode or the specified order mode is selectable on a single screen .

3. The item ordering method according to claim 1 further comprising:
a display-order-recipient-candidate-screen step of displaying an order-recipient-candidate screen on the first display or the second display when a setting of the specified order mode has been selected on the order-mode selection screen, wherein the order-recipient-candidate screen is a screen on which an arbitrary order recipient is selectable from a plurality of order recipient candidates; and
an accept-specified-order-recipient-registration step of accepting registration of an arbitrary order recipient that has been selected on the order-recipient-candidate screen.

4. The item ordering method according to claim 3, wherein
the order-recipient-candidate screen includes access information for accessing e-commerce sites of the order recipient candidates, and,
when the access information is pressed, the order-recipient-candidate screen is configured to guide a user to an e-commerce site of an order recipient associated with the pressed access information.

5. The item ordering method according to claim 4, wherein
the access information includes either logos of the order recipient candidates or address information of e-commerce sites of the order-recipient candidates or both the logos and the address information.

6. The item ordering method according to claim 3, wherein
the order-recipient candidates on the order-recipient-candidate screen includes a store from which the electric product has been bought or a group to which the store is affiliated.

7. The item ordering method according to claim 1, further comprising
an accept-item-setting step of accepting a setting of the item.

8. The item ordering method according to claim 1, wherein
the electric product is a washing machine, and
the item is a consumable used by the washing machine.

9. A program causing a computer that includes a display to perform:
a display-order-mode-selection-screen step of displaying an order-mode selection screen on the display, wherein the order-mode selection screen is a screen on which a setting of an automatic order mode or a specified order mode is selectable, the automatic order mode is a mode in which an order is placed automatically for an item used in or by an electric product or stored in the electric product, and the specified order mode is a mode in which an order for the item is placed by specifying an arbitrary order recipient; and
an accept-order-mode-setting step of accepting a setting of the automatic order mode or the specified order mode on the order-mode selection screen.
